# EUROPÄISCHE PATENTANMELDUNG

(11) **EP 1 903 103 A1**
(43) Veröffentlichungstag der Anmeldung: **26.03.2008**
(21) Anmeldenummer: 07115935.4
(22) Anmeldetag: 07.09.2007
(51) Int. Cl.: C12M 1/26

(54) **Luftkeimsammler**

(30) Priorität: 22.09.2006 DE 102006044546
(71) Anmelder: Biotest AG, 63303 Dreieich (DE)
(72) Erfinder: Hempel, Hans-Dieter, 63814 Mainaschaff (DE); Friemert, Volker-Joachim, Dr., 85551 Kirchheim (DE)
(74) Vertreter: Ettmayr, Andreas

(57) **Zusammenfassung**

Das Funktionsprinzip des erfindungsgemäßen Luftkeimsammlers besteht in der definierten Relativbewegung zwischen Sammelmedium (20) bzw. Aufnahme (10) des Sammelmedium enthaltenden Sammelstreifens (1) und Siebabdeckung (11). Die Aufnahme (10) mit dem in Umfangsrichtung gehalterten Sammelstreifen (1) ist drehbar, die Siebabdeckung (11) steht fest. Ebenso kann, insbesondere bei feststehender Aufnahme (10) die Siebabdeckung (11) drehbar ausgeführt sein. Auch ist es möglich, den Sammelstreifen (1) in der Aufnahme zu bewegen, um die erforderliche Relativbewegung zu erhalten. Die keimbeladene Luft wird von dem Ventilator (18) auf dem folgenden Weg gefördert: Durch die zentrale Öffnung der Abdeckhaube (19) und die Gasdurchtrittsöffnungen (12) gelangt die Luft an die Oberfläche des Sammelmediums (20) in Vertiefungen (2) des Sammelstreifens (1), wo die Trägheitsabscheidung der luftgetragenen Keime erfolgt. Die Luft strömt weiter an der Aufnahme (10) vorbei (etwa durch Spalte oder Bohrungen) in den Trommelaußenraum und wird vom Ventilator (18) durch die Langlöcher (22) gesogen und am (nicht dargestellten) unteren Ende des Luftkeimsammlers ausgestoßen.

## Beschreibung

Die vorliegende Erfindung betrifft Luftkeimsammler, insbesondere Luftkeimsammler mit einer Aufnahme zum Aufnehmen eines Sammelmediums und Beschleunigungsmitteln zum Beschleunigen von mit Keimen beladener Luft, um eine Trägheitsabscheidung der Keime aus der Luft auf das Sammelmedium zu ermöglichen.

Luftkeimsammler werden zur Überprüfung bzw. zum Nachweis der Luftreinheit in Laboren, Krankenhäusern, Fertigungsreinräumen usw. verwendet.

Luftkeimsammler bringen keimbeladene Luft in Kontakt mit einem Sammelmedium, oft einem sterilen Agarmedium, so daß Keime aus der Luft sich auf dem Medium ablagern. Durch Bebrütung kann die Zahl der abgeschiedenen Keime anhand der Anzahl der sich bildenden Kolonien ermittelt werden. In der Regel wird die zu untersuchende Luft zum kontrollierten Strömen über oder durch das Medium gebracht, um eine Aussage über die Keimanzahl pro Luftvolumeneinheit treffen zu können.

Neben Filterverfahren, bei welchen die zu untersuchende Luft durch einen Filter gesaugt wird, und dem sogenannten Impinger-Verfahren, bei welchem die zu beprobende Luft durch eine Flüssigkeit geführt wird, haben sich vor allem Impaktionsverfahren durchgesetzt.

Filterverfahren erreichen die Abscheidung aller Keime, welche größer als die Größe der Filterporen ist, vermehrungsfähige Keime neigen jedoch auf dem Filter oft zum Austrocknen. Ferner ist die Handhabung aufwendig, da die Filtermedien (früher häufig Papier, heute meist Gelatine) zunächst unter Sterilbedingungen in Kassetten eingelegt, nach der Probennahme aus diesen entnommen und schließlich aufgelöst und auf Agarplatten aufgebracht werden müssen. Das lmpinger-Verfahren vermeidet Austrocknung, ist jedoch aufgrund der Flüssigkeitshandhabung ebenfalls aufwendig. Zudem führt es häufig zu anderen Ergebnissen als Vergleichsverfahren, da sich Agglutinate in der Flüssigkeit auflösen können, und die somit gezählten Einzelkeime zu einer höheren Kolonienzahl führen.

Bei den obenerwähnten Impaktionsverfahren erfolgt eine Trägheitsabscheidung der luftgetragenen Keime in einer Prallströmung oder im Zentrifugalfeld. Bei einfachen und sehr preisgünstig ausführbaren Verfahren- ist eine Agarplatte unter bzw. hinter einer Siebabdeckung (Siebplatte) angeordnet, durch welche die keimbeladene Luft strömt. In der Prallströmung fallen die Keime auf das Nährmedium, während die Luft seitwerts abströmt. Da die Luft stets an definierten Stellen, nämlich unter den Sieblöchern (nachfolgend auch Gasdurchtrittsöffnungen) auf den Agar trifft, können an diesen Stellen durch Austrocknung dellenartige Bereiche entstehen. Ferner ist die ermittelte Keimzahl tendenziell zu niedrig, da Keime immer an denselben Stellen unter den Sieblöchern auftreffen und somit mehrere koloniebildende Einheiten als eine gezählt werden können. Auch können beim Durchtritt durch die Sieblöcher auftretende Scherkräfte die Vermehrungsfähigkeit von Keimen schwächen.

Im sogenannten Hycon-Verfahren erfolgt die Trägheitsabscheidung der luftgetragenen Keime im Zentrifugalfeld. Angesaugte Luft wird mittels Rotorblättern beschleunigt und trifft auf eine mit Agar versehene, mitrotierende Zentrifugenfläche. Es handelt sich dabei um ein für die Keime recht schonendes Verfahren, vor allem jedoch ergeben sich in der Regel aussagekräftige Ergebnisse durch das geschlossene und gut validierbare System. Der Agar befindet sich dabei in Vertiefungen eines Sammelstreifens, welcher vor dem Sammelvorgang in die Zentrifuge eingesetzt und danach herausgenommen wird. Durch den mitrotierenden Streifen können mitunter Unwuchten entstehen.

Vor dem Hintergrund der geschilderten Problematik ist es Aufgabe der vorliegenden Erfindung, einen Luftkeimsammler bereitzustellen, welcher die genannten Nachteile nicht, oder nur in geringerem Umfang besitzt. Ferner soll sich der Luftkeimsammler leicht als kompaktes und tragbares Gerät ausführen lassen, sowie eine hohe Zuverlässigkeit und Zählgenauigkeit, insbesondere auch bei wechselnden Durchsätzen bieten.

Gemäß einem Aspekt der vorliegenden Erfindung wird diese Aufgabe durch einen Luftkeimsammler nach Anspruch 1 gelöst. Besonders vorteilhafte Ausführungsformen der Erfindung können gemäß einem der Ansprüche 2-25 gestaltet sein.

Grundsätzlich kann jede im Rahmen der vorliegenden Anmeldung beschriebene bzw. angedeutete Variante der Erfindung besonders vorteilhaft sein, je nach wirtschaftlichen und technischen Bedingungen im Einzelfall. Soweit nichts gegenteiliges dargelegt ist, bzw. soweit grundsätzlich technisch realisierbar, sind einzelne Merkmale der beschriebenen Ausführungsformen austauschbar oder miteinander sowie auch mit aus dem Stand der Technik bekannten Maßnahmen kombinierbar.

Nachfolgend werden anhand der zugehörigen Zeichnungen Beispiele bevorzugter Ausführungsformen der vorliegenden Erfindung näher erläutert. Die Zeichnungen sind dabei rein schematische und, aus Gründen der Anschaulichkeit, nicht maßstäbliche Darstellungen. Insbesondere können Verhältnisse der Abmessungen zueinander von tatsächlichen Ausführungen abweichen.

Einander entsprechende Elemente sind in den einzelnen Figuren jeweils, soweit sinnvoll, mit den gleichen Bezugszeichen versehen.

Im einzelnen zeigen:
- Fig. 1: die perspektivische Explosionszeichnung einer besonders bevorzugten Ausführungsform eines erfindungsgemäßen Luftkeimsammlers, wobei der untere Gehäuseteil abgebrochen und die Abdeckhaube geschnitten dargestellt ist,
- Fig. 2: einen halbseitigen Querschnitt des Sammelteils eines ähnlich Fig. 1 ausgeführten Luftkeimsammlers,
- Fig. 3a-b: stilisiert die trommelförmige Aufnahme sowie einen Siebtrommeleinsatz eines erfindungsgemäßen Luftkeimsammlers in der Draufsicht sowie verschiedene Stadien des vorzugsweise vorgesehenen Einzugs eines entsprechend Fig. 3c gestalteten Sammelstreifens,
- Fig. 3c: eine einfache Ausführung eines für den Gebrauch mit einem erfindungsgemäßen Luftkeimsammler gestalteten Sammelstreifens in der Draufsicht.

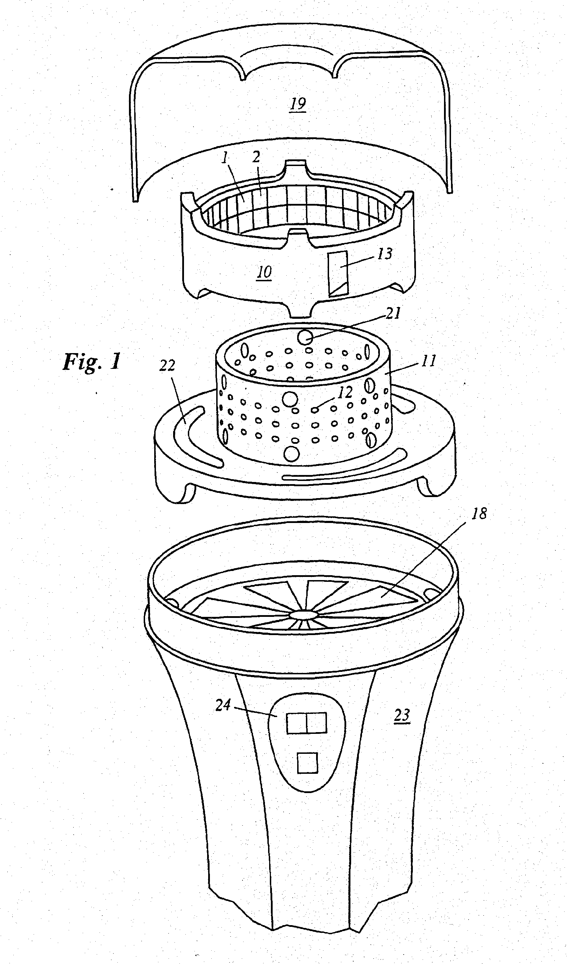

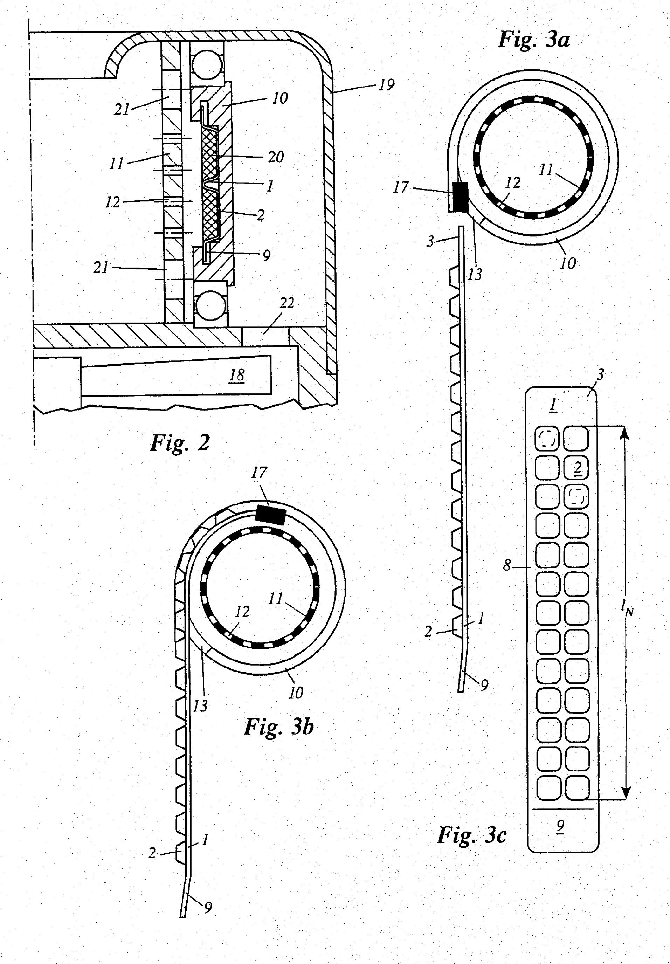

Die in Fig. 1 abgebildete Explosionszeichnung illustriert anhand einer besonders bevorzugten Ausführungsform das Funktionsprinzip eines erfindungsgemäßen Luftkeimsammlers, welches in der Relativbewegung zwischen Sammelmedium 20 bzw. Aufnahme 10 und Siebabdeckung 11 besteht. Zum besseren Verständnis kann die halbseitigen Querschnittsdarstellung aus Fig. 2 hinzugezogen werden, welche der in Fig. 1 dargestellten Ausführungsform weitgehend entspricht.

Die Aufnahme 10 mit dem in Umfangsrichtung gehalterten Sammelstreifen 1 ist drehbar, die Siebabdeckung 11 steht fest. Ebenso kann, insbesondere bei feststehender Aufnahme 10 die Siebabdeckung 11 drehbar ausgeführt sein. Auch ist es möglich, den Sammelstreifen 1 in der Aufnahme zu bewegen, um die erforderliche Relativbewegung zu erhalten. Der in Umfangsrichtung gehalterte Sammelstreifen 1 ist in Fig. 1 nur angedeutet dargestellt. Er kann im wesentlichen so ausgeführt sein, wie der unten anhand Fig. 3c beschriebene Streifen 1.

Die Luft wird von dem (koaxial mit der Aufnahme 10 angeordneten) Ventilator 18 auf dem folgenden Weg gefördert (gesaugt): Durch die zentrale Öffnung der Abdeckhaube 19 und die Gasdurchtrittsöffnungen 12 gelangt die Luft an die Oberfläche des Sammelmediums, vorzugsweise Nährmediums 20 in Vertiefungen 2 des Sammelstreifens 1, wo die Trägheitsabscheidung der luftgetragenen Keime erfolgt (ähnlich wie bei einer herkömmlichen, eingangs beschriebenen Siebplatte).

Bei stark keimbelasteter Luft kann ein Teil der Luft durch schließbare Bypass-Bohrungen 21 strömen. Der (nicht dargestellte) Verschlußmechanismus kann beispielsweise als ein drehbarer, mit der Siebabdeckung 11 konzentrischer und an dieser anliegender Ring ausgeführt sein, welcher Bohrungen aufweist, die sich je nach Verdrehwinkel ganz, teilweise oder gar nicht mit den Bypass-Bohrungen 21 überdecken.

Die Luft strömt weiter an der Aufnahme 10 vorbei (etwa durch Spalte oder Bohrungen) in den Trommelaußenraum und wird vom Ventilator 18 durch die Langlöcher 22 gesogen und am (nicht dargestellten) unteren Ende des Luftkeimsammlers ausgestoßen. Die Fördermenge kann mittels veränderbarer Ventilatordrehzahl variiert werden.

Im Gehäuse 23 des tragbar ausgeführten Geräts sind neben Antrieb und Spannungsversorgung (Netzteil oder Batterie) noch die für den Betrieb erforderlichen Steuerelemente untergebracht (nicht dargestellt). In einem Bedienfeld 24 sind für die Bedienung erforderliche Bedienelemente und Anzeigen angeordnet. Vorteilhafterweise kann das Gerät so ausgestattet sein, daß es den Sammelvorgang kennzeichnenden Daten (z.B. Luftdurchsatz bzw. Ventilatordrehzahl, Bypass-Einstellung, Bewegungskennwerte, wie etwa Verdrehwinkel zwischen Aufnahme 10 und Siebabdeckung 11) erfassen sowie speichern und/oder, vorzugsweise drahtlos, an einen externen Empfänger übertragen kann.

Der Einzugsschacht 13 ist für den vorzugsweise realisierten automatischen Einzug des Sammelstreifens 1 vorgesehen und durch Abnehmen der Abdeckhaube 19 zugänglich.

Alternativ kann der Sammelstreifen 1 auch manuell eingelegt werden. Der automatische Einzug bietet jedoch den Vorteil, daß der Vorgang des Mediumwechsels beschleunigt, vereinfacht und vereinheitlicht wird. Die Gefahr von Handhabungsfehlern sowie von einer Kontamination durch unbeabsichtigte Berührung des Mediums 20 verringert sich.

Die Bewegung der Aufnahme 10 relativ zur Siebabdeckung 11 kann über einen Zahnkranz, über eine Magnetkupplung oder andere dem Fachmann an sich bekannte Maßnahmen der Drehmomentsübertragung bewerkstelligt werden.

Indem die Gasdurchtrittsöffnungen 12 einen vorgegebenen Weg über das Medium 20 zurücklegen, trifft der Luftstrom nicht immer an denselben Stellen auf, was lokale Austrocknung sowie die Gefahr des Auftreffens zweier Keime an derselben Stelle stark vermindert.

Das Prinzip der Relativbewegung zwischen Siebabdeckung 11 und Nähr- bzw. Sammelmedium 20 ist auch im ebenen (nicht rotationssymmetrischen) Fall, wie etwa beim herkömmlichen Siebplattenverfahren vorteilhaft nachbildbar. Auch sind Anordnungen konzentrischer Trommeln (oder anderer prismatischer Körper) möglich, welche eine axiale Relativbewegung zueinander ausüben.

Der in Fig. 3c in der Draufsicht dargestellte Sammelstreifen 1 weist, wie oben erwähnt, mit einem Sammelmedium, vorzugsweise einem Nährmedium befüllte Vertiefungen 2 auf. Er ist vorzugsweise mittels eines Tiefziehverfahrens aus einer formstabilen, jedoch flexiblen Kunststoffolie gefertigt, kann jedoch auch auf andere Weise hergestellt sein.

In dem Bereich des Streifens 1; der beim vorzugsweise vorgesehenen automatischen Einzug vorläuft, weist er einen verbreiterten Rand 3 als Angriffsfläche für das reibschlüssige Ergreifen beim Einzug in den Luftkeimsammler auf. Stattdessen oder zusätzlich können auch andere Mittel vorgesehen sein, welche für den, insbesondere auch formschlüssigen, Angriff von Einzugsmitteln zum automatisierten Einziehen des Sammelstreifens in einen Luftkeimsammler angepaßt sind. Denkbar sind z.B. ein Querschlitz, Stanzlöcher, eine geprägte Querrille oder seitliche Kerben im Rand 8 des Streifens 1.

Zum Haltern in der Aufnahme 10 sowie zur Führung beim Einziehen in den Luftkeimsammler besitzt der Streifen 1 einen nicht zu schmalen seitlichen Rand 8. Beim vorzugsweise vorgesehenen automatischen Einzug kann dieser zur Unterstützung des Vorschubs (etwa mittels Stachelwalzen oder dergleichen) ähnlich wie ein Filmstreifen perforiert sein.

Der Streifen 1 aus Fig. 3c besitzt (in seinem beim Einzug nachlaufenden Teil) eine gegenüber der Streifenhauptebene, d.h. der gedachten Verbindungsebene der Ränder der Vertiefungen 2, abknickende Anfaßlasche 9, welche die Handhabung erleichtert und zudem als Beschriftungsfläche dienen kann. Zur Beschriftung können geeignete Schreibgeräte oder Etiketten verwendet werden; darüberhinaus ist jedoch auch die Kennzeichnung mittels eines laserbeschriftbaren Folienaufbaus, einer RFID (Radio Frequency Identification Device) Anordnung (Transponderchip), Barcodes, Matrixcodes etc. möglich.

Figuren 3a und 3b stellen stilisiert den Einzugsvorgang eines gemäß oder ähnlich Fig 3c gestalteten Streifens in einen ähnlich Fig. 1 gestalteten Luftkeimsammler dar.

Wie in Figuren 1 und 2 ist konzentrisch mit der trommelförmigen Streifenaufnahme 10 eine trommelförmige Siebabdeckung 11 mit Gasdurchtrittsöffnungen 12 vorgesehen. Die keimbeladene Luft stömt im Betrieb vom Trommelinneren durch die Gasdurchtrittsöffnungen 12 auf die Oberfläche des dann eingezogenen Streifens 1 in der Aufnahme 10 und weiter seitlich ab (vollständig eingezogener Zustand nicht dargestellt). Durch Relativbewegung der Aufnahme 10 und Siebabdeckung 11 zueinander (oder durch Bewegung des Streifens 1 in der Aufnahme 10) können die eingangs im Zusammenhang mit Siebplattenverfahren beschriebenen Probleme lokaler Austrocknung und stärkerer Zählabweichungen kaum auftreten. Besonders vorteilhaft wirkt sich dabei aus, diese Bewegung definiert auszuführen, so daß jede Gasdurchtrittsöffnung 12 einen vorgegebenen Weg- bzw. Winkelbereich durchwandert.

Unter einer definiert ausgeführten Relativbewegung soll insbesondere auch eine zeitlich kontrollierte Relativbewegung zwischen Siebabdeckung 11 und Sammelstreifen 1 verstanden werden, dergestalt, daß während einer vorgegebenen Zeit des Sammelvorgangs eine vorgegebene relative Weg- oder Winkelbewegung erfolgt. Besonders vorteilhaft kann es dabei sein, während der Dauer eines Sammelvorgangs eine vollständige Umdrehung oder mehrere vollständige Umdrehungen der Aufnahme 10 und Siebabdeckung 11 relativ zueinander (bzw. einen vollständigen Umlauf oder mehrere vollständige Umläufe des Streifens 1 in der Aufnahme 10) auszuführen, so daß jede Gasdurchtrittsöffnung einen Winkel von 360 Grad oder einem ganzzahligen Vielfachen hiervon überstreicht. Sind die Durchtrittsöffnungen 12 in einem sich selbst wiederholenden Muster angeordnet, so ist es ebenso vorteilhaft, den Luftkeimsammler dazu auszulegen, während der vorgegebenen Zeit des Sammelvorgangs eine Relativbewegung zwischen Siebabdeckung 11 und Sammelstreifen 1 auszuführen, welche dem Abstand oder einem ganzzahligen Vielfachen des Abstands entspricht, nach welchem sich das Muster wiederholt.

Vorteilhaft ist auch eine Ausführung, bei welcher die vorgegebene relative Weg- oder Winkelbewegung während der vorgegebenen Zeit der mit Sammelmedium versehenen Nutzlänge IN des Sammelstreifens 1 entspricht (vgl. Fig. 3c).

Besonders bevorzugt sind die Durchtrittsöffnungen 12 auf der Siebabdeckung 11 so verteilt, daß jeder Punkt der Oberfläche des Sammelmediums 20 während der Dauer eines Sammelvorgangs mindestens einmal in Überdeckung mit einer der Durchtrittsöffnungen 12 kommt.

Das zeitlich kontrollierte Abfahren eines vorgegebenen Wegs oder Winkels kann mittels einer mechanischen oder einer einfachen elektrischen Steuerung umgesetzt sein, vorzugsweise ist eine entsprechende Steuerung jedoch mikroelektronisch ausgeführt. Dabei können auch verschiedene Bewegungsmodi vorwählbar sein, etwa bei Verwendung unterschiedlicher Ausführungen von Siebabdeckungen 12 oder Sammelstreifen 1.

Der Einzug des Streifens 1 erfolgt im wesentlichen tangential durch einen Einzugsschacht 13. Dieser muß nicht, wie dargestellt, erhaben sein, sondern kann sich auch bündig in die Außenseite der Aufnahme 10 einfügen.

Der Streifen 1 wird mittels einer tangential in der Aufnahme 10 laufenden Mitnahmevorrichtung 17 bzw. einer in der Aufnahme 10 geführten Schlitten eingezogen. Die Endposition (nicht dargestellt) wird mittels eines Anschlags oder geeigneter Sensoren erkannt. Zum "Ergreifen" des Streifens 1 weist die Mitnahmevorrichtung 17 geeignete manuell oder automatisch bediente Mittel auf (nicht dargestellt). Hierbei kann es sich beispielsweise um eine Klemmvorrichtung oder Stifte oder Rasten handeln, welchletztere beispielsweise in Schlitze, Löcher, Rillen oder Kerben (in Fig. 3c sämtlich nicht dargestellt) geeigneter Streifen 1 eingreifen.

Alternativ kann der Streifen 1 mittels Endlosförderer eingezogen werden. Dabei kann es sich um Walzen oder Rollen handeln, welche den Streifen reibschlüssig fördern, aber auch die formschlüssige Förderung des Streifens 1 ist möglich, beispielsweise mittels Stachelwalzen oder Zahnrädern, wenn der Streifen 1 eine Randperforation (wie oben erwähnt) oder eine geeignete Rippung aufweist. Die Endlosförderer können entweder nur im Bereich des Einzugsschachts 13 oder aber auch über den Umfang der Aufnahme 10 verteilt angeordnet sein.

Auch die Kombination von Endlosförderern im Bereich des Einzugsschachts 13 mit einer Mitnahmevorrichtung 17 kann vorteilhaft sein: So kann beispielsweise der Einzug über Endlosförderer geschehen, bis das vorlaufende Streifenende von der Klemmung, Raste etc. der Mitnahmevorrichtung 17 ergriffen werden kann.

Der Einzug kann vollautomatisch oder mittels manueller Steuerung erfolgen.

Ein automatischer Einzug des Sammelstreifens 1 läßt sich vorteilhaft mit der obenerwähnten Gestaltungsvariante kombinieren, daß die Relativbewegung zwischen Sammelstreifen 1 und Siebabdeckung 11 während des Sammelvorgangs durch Bewegung des Sammelstreifens 1 in der Aufnahme erhalten wird. Vorzugsweise kann dann ein gemeinsamer Antrieb für den Streifeneinzug und die Erzeugung der Relativbewegung im Sammelbetrieb vorgesehen sein. Als Vorteile ergibt sich eine Verminderung des Anteils beweglicher Teile sowie eine unter Umständen eine einfacher ausführbare Abdichtung.

## Patentansprüche

1. Luftkeimsammler, aufweisend
- eine Aufnahme (10) zum Aufnehmen eines Sammelmediums (20),
- Beschleunigungsmittel zum Beschleunigen von mit Keimen beladener Luft, um eine Trägheitsabscheidung der Keime aus der Luft auf das Sammelmedium (20) zu ermöglichen, und
- eine mit Durchtrittsöffnungen (12) für die beschleunigte Luft versehene Abdeckung (11) des Sammelmediums (20),
**dadurch gekennzeichnet,**
**daß** die Abdeckung (11) und das Sammelmedium (20) während der Trägheitsabscheidung relativ zueinander definiert beweglich sind.

2. Luftkeimsammler gemäß Anspruch 1, **dadurch gekennzeichnet, daß** der Luftkeimsammler dazu ausgelegt ist, während des Sammelvorgangs eine zeitlich kontrollierte Relativbewegung zwischen Abdeckung (11) und Sammelmedium (20) auszuführen dergestalt, daß während einer vorgegebenen Zeit des Sammelvorgangs eine vorgegebene relative Weg- und/oder Winkelbewegung erfolgt.

3. Luftkeimsammler gemäß Anspruch 2, **dadurch gekennzeichnet, daß** das Sammelmedium (20) in einem in der Aufnahme (10) wechselbar gehalterten Sammelstreifen (1) enthalten ist, und die vorgegebene relative Weg- oder Winkelbewegung während der vorgegebenen Zeit der mit Sammelmedium (20) versehenen Nutzlänge (IN) des Sammelstreifens (1) entspricht.

4. Luftkeimsammler gemäß Anspruch 2, **dadurch gekennzeichnet, daß** die Durchtrittsöffnungen (12) in einem sich selbst wiederholenden Muster angeordnet sind, und der Luftkeimsammler dazu ausgelegt ist, während der vorgegebenen Zeit des Sammelvorgangs eine Relativbewegung zwischen Abdeckung (11) und Sammelmedium (20) auszuführen, welche dem Abstand oder einem ganzzahligen Vielfachen des Abstands entspricht, nach welchem sich das Muster wiederholt.

5. Luftkeimsammler gemäß einem der vorangehenden Ansprüche, **dadurch gekennzeichnet**, die Aufnahme (10) trommelförmig ist, und die Abdeckung (11) als koaxial mit der Aufnahme (10) angeordnete Lochtrommel im von der Aufnahme (10) umschlossenen Trommelinneren ausgeführt ist.

6. Luftkeimsammler gemäß Anspruch 5, **dadurch gekennzeichnet, daß** die Durchtrittsöffnungen (12) gleichmäßig über den Umfang des Trommelmantels verteilt sind.

7. Luftkeimsammler gemäß einem der Ansprüche 5-6, **dadurch gekennzeichnet, daß** die Aufnahme (10) drehbar ausgeführt ist.

8. Luftkeimsammler gemäß Anspruch 7, **dadurch gekennzeichnet, daß** die Lochtrommel feststehend ausgeführt ist.

9. Luftkeimsammler gemäß einem der Ansprüche 5-8, **dadurch gekennzeichnet, daß** die Beschleunigungsmittel einen koaxial mit der Aufnahme (10) angeordneten Ventilator (18) umfassen.

10. Luftkeimsammler gemäß Anspruch 9, **dadurch gekennzeichnet, daß** der Ventilator (18) außerhalb des von der Aufnahme (10) umschlossenen Trommelinneren angeordnet ist

11. Luftkeimsammler gemäß einem der vorangehenden Ansprüche, **dadurch gekennzeichnet, daß** das Sammelmedium (20) in einem wechselbar in der Aufnahme (10) gehalterten Sammelstreifen (1) enthalten ist.

12. Luftkeimsammler gemäß Anspruch 11, **dadurch gekennzeichnet, daß** der Sammelstreifen (1) relativ zur Aufnahme (10) beweglich ausgeführt ist.

13. Luftkeimsammler gemäß Anspruch 12, **dadurch gekennzeichnet, daß** der Luftkeimsammler Einzugsmittel (17) zum automatisierten Einziehen des Sammelstreifens (1) in die Aufnahme (10) aufweist.

14. Luftkeimsammler gemäß Anspruch 13, **dadurch gekennzeichnet, daß** ein gemeinsamer Antrieb für die Einzugsmittel sowie zum Bewegen des Sammelstreifens (1) relativ zur Aufnahme (10) während des Sammelvorgangs vorgesehen ist.

15. Luftkeimsammler gemäß einem der vorangehenden Ansprüche, **dadurch gekennzeichnet, daß** die Durchtrittsöffnungen (12) rund sind.

16. Luftkeimsammler gemäß einem der vorangehenden Ansprüche, **dadurch gekennzeichnet, daß** die Durchtrittsöffnungen (12) untereinander gleichförmig sind.

17. Luftkeimsammler gemäß Anspruch 16, **dadurch gekennzeichnet, daß** der Abstand benachbarter Durchtrittsöffnungen (12) voneinander, jeweils vom Rand der Durchtrittsöffnungen (12) gemessen, größer ist als der Durchmesser eines in eine Durchtrittsöffnung (12) einbeschriebenen Kreises.

18. Luftkeimsammler gemäß einem der Ansprüche 16-17, **dadurch gekennzeichnet, daß** der Abstand benachbarter Durchtrittsöffnungen (12) voneinander, jeweils vom Rand der Durchtrittsöffnungen (12) gemessen, kleiner ist als das Fünffache des Durchmessers eines um eine Durchtrittsöffnung (12) umbeschriebenen Kreises.

19. Luftkeimsammler gemäß einem der vorangehenden Ansprüche, **dadurch gekennzeichnet, daß** die Durchtrittsöffnungen (12) eine Mindestfläche von jeweils 0,2 Quadratmillimetern aufweisen.

20. Luftkeimsammler gemäß einem der vorangehenden Ansprüche, **dadurch gekennzeichnet, daß** die Durchtrittsöffnungen (12) eine Höchstfläche von jeweils 1 Quadratmillimeter aufweisen.

21. Luftkeimsammler gemäß einem der vorangehenden Ansprüche, **dadurch gekennzeichnet, daß** die Abdeckung (11) Bypass-Öffnungen (21) aufweist, wobei die Fläche einer Bypass-Öffnung (21) größer ist als die Fläche einer Durchtrittsöffnung (12).

22. Luftkeimsammler gemäß einem der vorangehenden Ansprüche, **dadurch gekennzeichnet, daß** die Bypass-Öffnungen (21) verschließbar sind.

23. Luftkeimsammler gemäß einem der vorangehenden Ansprüche, **dadurch gekennzeichnet, daß** er als Handgerät ausgeführt ist.

24. Luftkeimsammler gemäß einem der vorangehenden Ansprüche, **dadurch gekennzeichnet, daß** er Mittel zum Erfassen von den Sammelvorgang kennzeichnenden Daten aufweist.

25. Luftkeimsammler gemäß Anspruch 24, **dadurch gekennzeichnet, daß** er Mittel zum drahtlosen Übertragen der den Sammelvorgang kennzeichnenden Daten an einen externen Empfänger aufweist.
